# EUROPEAN PATENT SPECIFICATION

(11) **EP 2 311 699 B1**
(45) Date of publication and mention of the grant of the patent: **04.09.2013**
(21) Application number: 09173233.9
(22) Date of filing: 16.10.2009
(51) Int. Cl.: B60T 8/26, B60T 8/32, B62L 3/08

(54) **Braking system for motorcycle**
Bremssystem für ein Motorrad
Système de freinage pour motocyclette

(43) Date of publication of application: 20.04.2011
(73) Proprietor: Yamaha Hatsudoki Kabushiki Kaisha, Iwata-shi, Shizuoka 438-8501 (JP); Continental Automotive Corporation, Yokohama-city Kanagawa 221-0031 (JP); Continental Teves AG & Co. oHG, 60488 Frankfurt am Main (DE)
(72) Inventor: Kajiwara, Kunio, Iwata-shi, Shizuoka 438-8501 (JP); Watanabe, Takahiro, Iwata-shi, Shizuoka 438-8501 (JP); Kusano, Taishi, Asahi-city, Chiba 289-2505 (JP); Uchida, Takanori, Yokohama-city, Kanagawa 221-0031 (JP); Kremer, Michael, 64846 Groß-Zimmern (DE); Meixner, Michael, 60320 Frankfurt am Main (DE)
(74) Representative: Grünecker, Kinkeldey, Stockmair & Schwanhäusser

(56) References cited:
- EP-A1- 2 042 396
- EP-A2- 1 277 635
- EP-A2- 1 671 863
- WO-A1-2006/040261
- WO-A1-2008/090783
- US-A1- 2006 082 216

## Description

The present invention relates to a braking system for a motorcycle according to the preamble of independent claim 1. Such a braking systemcan be taken from the prior art document EP 1 277 635 A2.

As a braking system for a motorcycle, there has been conventionally proposed a braking system including two braking mechanisms and an association mechanism which drives one of the braking mechanisms when the other braking mechanism is operated. The following Japanese Patent Application Laid-Open No. 2000-6779 discloses one example of the braking system having the two braking mechanisms and the association mechanism.

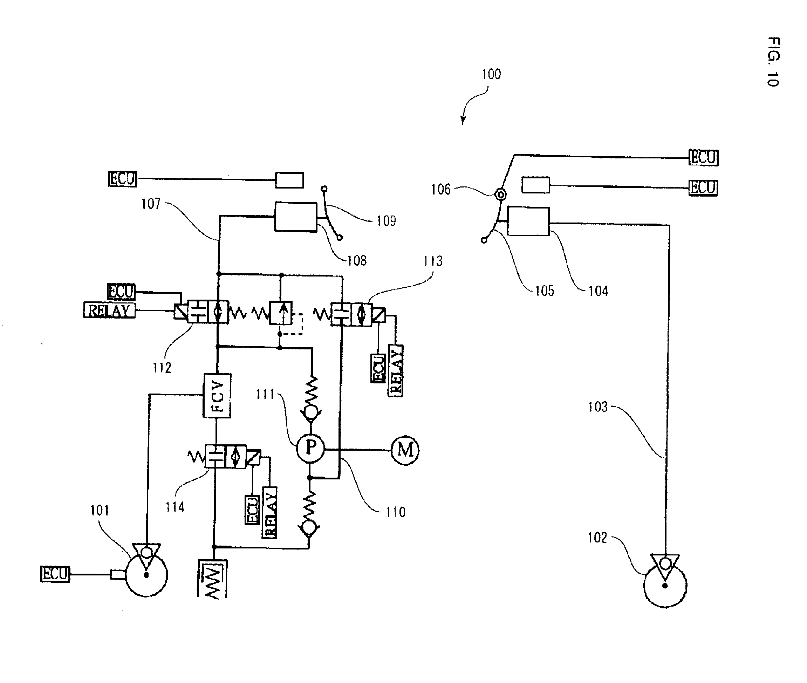

Fig. 10 is **a** brake fluid circuit diagram of a braking system described in the following Japanese Patent Application Laid-Open No. 2000-6779. As shown in Fig. 10, the braking system 100 includes a first and a second braking force generating mechanisms 101 and 102. The second braking force generating mechanism 102 is connected to a master cylinder 104 through **a** brake fluid passage 103. A rear brake pedal 105 is attached to the master cylinder 104. If the rear brake pedal 105 is operated, brake fluid in the master cylinder 104 is pushed out. As a result, hydraulic pressure is supplied to the second braking force generating mechanism 102, and a braking force is generated. The rear brake pedal 105 is provided with a stroke sensor 106. The operation of the rear brake pedal 105 is detected by the stroke sensor 106.

The first braking force generating mechanism 101 is connected to a master cylinder 108 through **a** brake fluid passage 107. A front brake lever 109 is attached to the master cylinder 108.

A brake fluid passage 110 is connected to the brake fluid passage 107. The brake fluid passage 110 is provided with **a** brake fluid pump 111 constituting an ABS mechanism and an assist mechanism. The ABS mechanism and the assist mechanism are constituted by the brake fluid pump 111 and on-off valves 112 to 114.

In a state where the ABS mechanism and the assist mechanism do not function, the on-off valve 112 is opened and the on-off valves 113 and 114 are closed. Therefore, if the front brake lever 109 is operated, brake fluid in the master cylinder 108 is pushed out. As a result, hydraulic pressure is supplied to the first braking force generating mechanism 101 to generate a braking force.

In the braking system 100, when the operation of the rear brake pedal 105 is detected and a predetermined condition is satisfied, the assist mechanism is driven. As a result, hydraulic pressure is supplied to the first braking force generating mechanism 101, so that a braking force is supplied also to the front wheel. More specifically, the on-off valve 112 and the on-off valve 114 are closed and the on-off valve 113 is opened. Thus, brake fluid in the master cylinder 108 is sucked by the brake fluid pump 111 through the on-off valve 113, and then is supplied to the first braking force generating mechanism 101. Consequently, hydraulic pressure is supplied to the first braking force generating mechanism 101, so that a braking force is supplied also to the front wheel.

According to the braking system 100 above, both the first and the second braking force generating mechanisms 101 and 102 are driven if a predetermined condition is satisfied by the operation of the rear brake pedal 105. It is described in Japanese Patent Application Laid-Open No. 2000-6779 that a large braking force can therefore be generated as a whole.

However, the braking system 100 has a problem of being incapable of detecting a magnitude of hydraulic pressure supplied to the first braking force generating mechanism 101 by the operation amount of the front brake lever 109 and the assist mechanism in a state where the assist mechanism is driven by the rear brake pedal 105 being operated. Therefore, there is a problem that it is difficult to precisely control a braking force generated in the first braking force generating mechanism 101 with the assist mechanism driven.

It is an object of the invention to provide a braking system as indicated above capable of detecting a magnitude of hydraulic pressure applied to each braking mechanism also when the association mechanism is driven.

According to the present invention said object is solved by a braking system for a motorcycle having the features of independent claim 1. Preferredembodiments are laid down in the dependent claims.

Accordingly, it is provided a braking system for a motorcycle that includes a first braking force generating mechanism, a first master cylinder, a first brake fluid passage, a first operation member, a second braking force generating mechanism, a second master cylinder, a second brake fluid passage, a second operation member, an operation amount detection section, an association mechanism, a first hydraulic pressure detection section, a second hydraulic pressure detection section, and a control unit. The first braking force generating mechanism generates a braking force when hydraulic pressure is supplied. The first master cylinder supplies hydraulic pressure to the first braking force generating mechanism. The first brake fluid passage connects the first master cylinder and the first braking force generating mechanism with each other. The first operation member is for operating the first master cylinder. The second braking force generating mechanism generates a braking force when hydraulic pressure is supplied. The second master cylinder supplies hydraulic pressure to the second braking force generating mechanism. The second brake fluid passage connects the second master cylinder and the second braking force generating mechanism with each other. The second operation member is for operating the second master cylinder. The operation amount detection section detects an operation amount of the second operation member. The association mechanism includes a first on-off valve, a third brake fluid passage, **a** brake fluid pump and a second on-off valve. The first on-off valve is disposed in the first brake fluid passage. The first on-off valve opens and closes the first brake fluid passage. One end of the third brake fluid passage is connected to a portion of the first brake fluid passage closer to the first master cylinder than the first on-off valve. The other end of the third brake fluid passage is connected to a portion of the first brake fluid passage closer to the first braking force generating mechanism than the first on-off valve. The brake fluid pump is disposed in the third brake fluid passage, and sends brake fluid from the third brake fluid passage on the side of the first master cylinder toward the first braking force generating mechanism. The second on-off valve is disposed in the third brake fluid passage. The second on-off valve opens and closes the third brake fluid passage. The first hydraulic pressure detection section detects hydraulic pressure of a portion of the first brake fluid passage closer to the first master cylinder than a portion of the first brake fluid passage to which the one end of the third brake fluid passage is connected. The second hydraulic pressure detection section detects hydraulic pressure of a portion of the first brake fluid passage closer to the first braking force generating mechanism than a portion of the first brake fluid passage to which the other end of the third brake fluid passage is connected. The second hydraulic pressure detection section has a higher detection accuracy of hydraulic pressure than the first hydraulic pressure detection section. The second hydraulic pressure detection section has a lower resistance to pressure than the first hydraulic pressure detection section. The control unit closes the first on-off valve, opens the second on-off valve, and drives the brake fluid pump to supply brake fluid in the first master cylinder to the first braking force generating mechanism when the second operation member is operated, thereby carrying out a associationed control to supply hydraulic pressure of a magnitude corresponding to the operation amount of the second operation member to the first braking force generating mechanism. The control unit determines an operation amount of the first operation member based on a detection value of the second hydraulic pressure detection section when the associationed control is not in operation. The control unit determines the operation amount of the first operation member based on a detection value of the first hydraulic pressure detection section when the associationed control is in operation.

The first operation member may be a brake pedal. When the first operation member is the brake pedal, resistance to pressure required for the first hydraulic pressure detection section becomes higher. Thus, when the first operation member is the brake pedal, the present teaching is especially effective.

The braking system for a motorcycle may further include a fourth brake fluid passage which connects the first master cylinder and the second braking force generating mechanism with each other without using the second brake fluid passage. In this case, when the first operation member is operated, hydraulic pressure is mechanically supplied to the second braking force generating mechanism without using electronic control. Thus, the required precision of detection of the operation amount of the first operation member becomes lower.

It is preferable that the control unit stops the associationed control when the first operation member is operated during the associationed control.

During the associationed control, the brake fluid in the first master cylinder is supplied to the first braking force generating mechanism. Therefore, when the first operation member is operated and the associationed control is not stopped, an operating feeling of the first operation member is different between when the associationed control is in operation and when the associationed control is not in operation. There is an adverse possibility that a braking force of a magnitude suitable for a rider's intention is not generated in the first braking force generating mechanism. Therefore, there is a possibility that the rider of the motorcycle is bothered by a feeling of incongruity.

On the other hand, when the associationed control is stopped when the first operation member is operated during the associationed control, a difference in the operating feeling of the first operation member becomes small between when the associationed control is in operation and when the associationed control is not in operation. A braking force of a magnitude suitable for a rider's intention is generated in the first braking force generating mechanism. Therefore, the rider is less prone to be bothered by a feeling of incongruity.

It is preferable that when the first operation member is operated during the associationed control, the control unit opens the first on-off valve and closes the second on-off valve if hydraulic pressure of a magnitude corresponding to the operation amount of the first operation member detected by the first hydraulic pressure detection section is equal to or higher than the current hydraulic pressure supplied to the first braking force generating mechanism detected by the second hydraulic pressure detection section, and causes the association mechanism to maintain the current hydraulic pressure supplied to the first braking force generating mechanism if the hydraulic pressure of the magnitude corresponding to the operation amount of the first operation member detected by the first hydraulic pressure detection section is smaller than the current hydraulic pressure supplied to the first braking force generating mechanism detected by the second hydraulic pressure detection section.

For example, also when the operation amount of the first operation member is very small, the associationed control is stopped along with the operation of the first operation member. When hydraulic pressure corresponding to the operation amount of the first operation member is supplied to the first braking force generating mechanism, a braking force generated in the first braking force generating mechanism is abruptly largely varied along with the stop of the associationed control.

On the other hand, according to this structure, when hydraulic pressure of a magnitude corresponding to the operation amount of the first operation member is smaller than the current hydraulic pressure supplied to the first braking force generating mechanism, the current hydraulic pressure supplied to the first braking force generating mechanism by the association mechanism is maintained. Therefore, it is possible to avoid a case where a braking force generated in the first braking force generating mechanism is abruptly varied along with the stop of the associationed control.

The operation amount detection section may be a hydraulic pressure detection section which detects hydraulic pressure in the second brake fluid passage. The operation amount detection section may be a position sensor which detects a position of the second operation member, or may be a stroke sensor which directly detects the operation amount of the second operation member.

It is preferable that the control unit adjusts an opening of the second on-off valve, thereby controlling hydraulic pressure supplied to the first braking force generating mechanism during the associationed control. According to this structure, it is possible to swiftly and precisely adjust the hydraulic pressure supplied to the first braking force generating mechanism as compared with a case where the hydraulic pressure supplied to the first braking force generating mechanism is adjusted by adjusting output of the brake fluid pump.

It is preferable that the first on-off valve is opened when electric power is not supplied, and is closed when electric power is supplied, and the second on-off valve is closed when electric power is not supplied, and is opened when electric power is supplied. According to this structure, when the associationed control is not in operation, it is unnecessary to supply current to the first and the second on-off valves. It is only necessary to supply current to the first and the second on-off valves during the associationed control. Therefore, electric power consumed by the braking system can be reduced.

The motorcycle may include a front wheel and a rear wheel. The first braking force generating mechanism may be provided to the rear wheel, and the second braking force generating mechanism may be provided to the front wheel.

**Moreover,** it is preferable that the motorcycle includes a wheel provided with the first braking force generating mechanism, the braking system further includes a locked state detection section which detects a locked state of the wheel, and an ABS mechanism which sends brake fluid supplied to the first braking force generating mechanism toward the first master cylinder through a portion of the first brake fluid passage where the hydraulic pressure is detected by the first hydraulic pressure detection section, and the control unit drives the ABS mechanism and reduces the hydraulic pressure supplied to the first braking force generating mechanism when the locked state of the wheel is detected by the locked state detection section. When such an ABS mechanism is provided, especially large hydraulic pressure is applied to the first hydraulic pressure detection section when the ABS mechanism is driven. Therefore, the present invention in which the resistance to pressure of the first hydraulic pressure detection section is set high is especially effective.

**Moreover,** there are provided the first hydraulic pressure detection section which detects hydraulic pressure of the portion of the first brake fluid passage closer to the first master cylinder than the portion of the first brake fluid passage to which the one end of the third brake fluid passage is connected, and the second hydraulic pressure detection section which detects hydraulic pressure of the portion of the first brake fluid passage closer to the first braking force generating mechanism than the portion of the first brake fluid passage to which the other end of the third brake fluid passage is connected. When the control unit does not carry out the associationed control, the control unit determines the operation amount of the first operation member based on the detection value of the second hydraulic pressure detection section. Therefore, the operation amount of the first operation member can be detected highly accurately. During the associationed control, the control unit determines the operation amount of the first operation member based on the detection value of the first hydraulic pressure detection section. Therefore, even during the associationed control, it is possible to detect the operation of the first operation member by the first hydraulic pressure detection section. Since the first hydraulic pressure detection section has high resistance to pressure, it is possible to effectively prevent the first hydraulic pressure detection section from being damaged even if high hydraulic pressure is applied to the first hydraulic pressure detection section.

According to the invention in the case the first operation member has already been operated more than a first given operation amount, the control unit does not start an associationed control when the second operation member is operated. In this way a reaction to the operated first operation member caused by the start of the associationed control is prevented. The amount of operation of the first operation member is preferably detected by the first hydraulic pressure detection section, and the first given operation amount is given as a first pressure threshold, which can be adapted to the specific motorcycle. Preferably, an associationed control is not possible until the first operation member and the second operation member are operated less than a second given operation amount.

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing the associationed stop control;
Fig. 9 is a schematic structure diagram showing a structure of a braking system according to a modification; and
Fig. 10 is an brake fluid circuit diagram of a braking system described in Japanese Patent Application Laid-Open No. 2000-6779.

### DESCRIPTION OF THE PREFERRED EMBODIMENT

### [First Embodiment]

One example of a preferred mode in which the present invention is implemented will be described. However, the invention is not limited to the embodiment below.

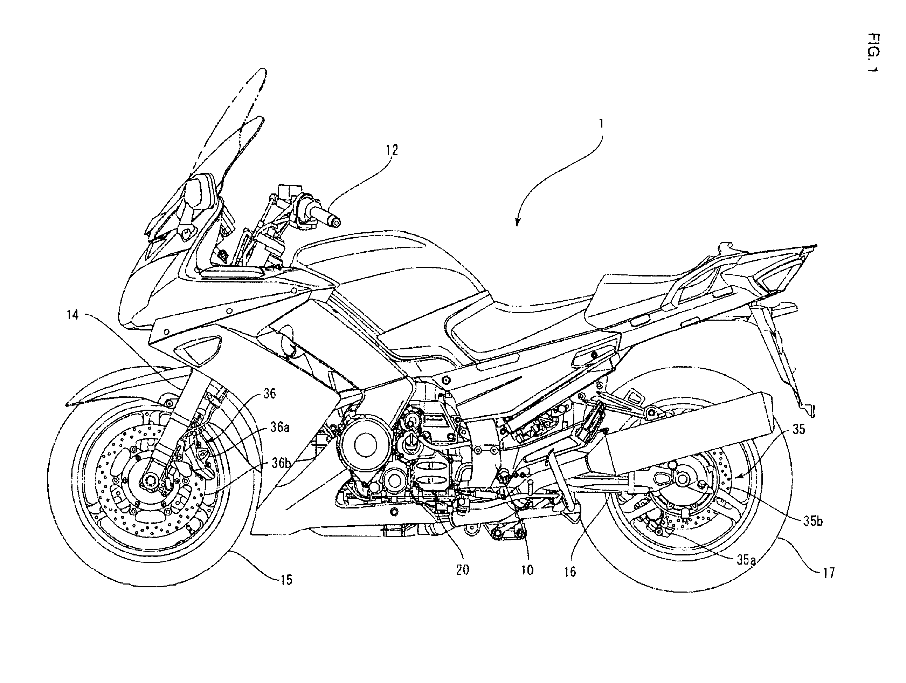

In this embodiment, one example of a preferred mode in which the present invention is implemented will be described based on a motorcycle 1 in a narrow sense shown in Fig. 1.

In the present invention, the motorcycle is not limited to the motorcycle in the narrow sense. The motorcycle refers to any vehicle on which a rider straddles. The motorcycle includes an ATV (All Terrain Vehicle), and a motorcycle in a broad sense. The motorcycle in the broad sense includes a moped, a motocrosser and a scooter in addition to the motorcycle in the narrow sense. The motorcycle in the broad sense includes a vehicle having two or more front wheels and/or two or more rear wheels.

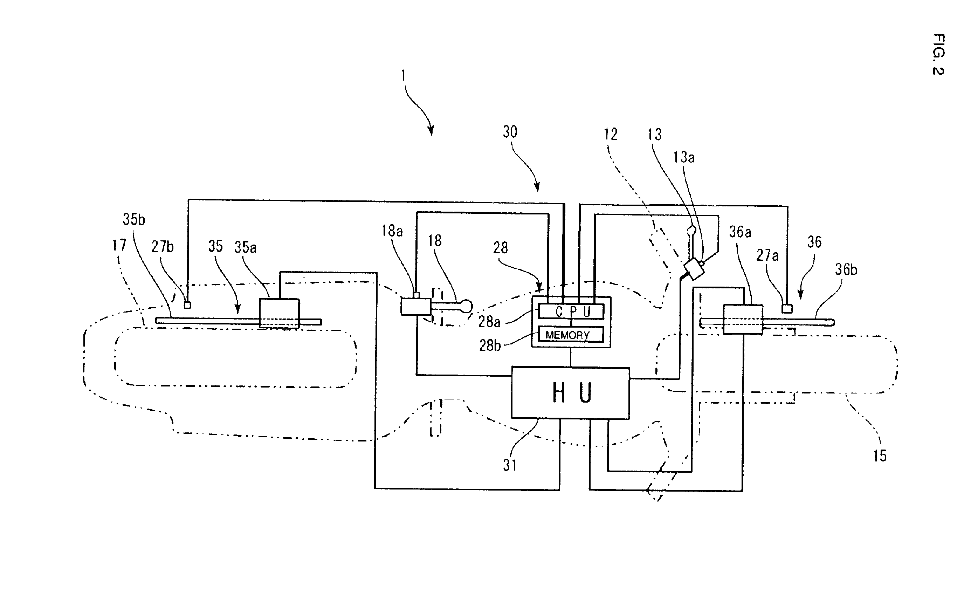

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16. The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in **a** HU (Hydraulic Unit) 31.

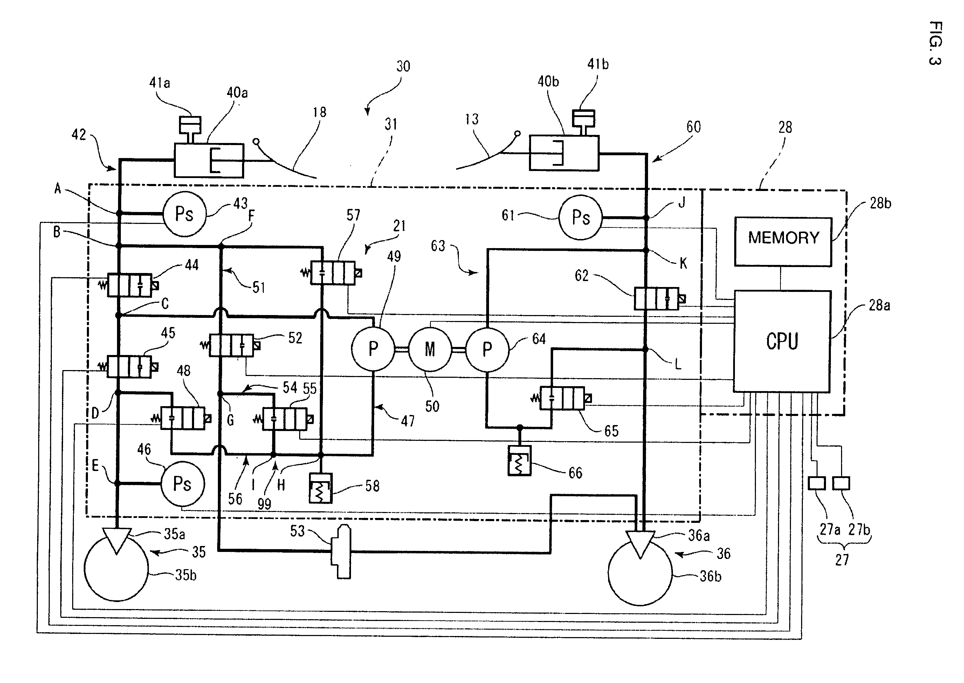

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. The second braking force generating mechanism 36 is supplied with hydraulic pressure, thereby generating a braking force for the front wheel 15. The second braking force generating mechanism 36 includes a second caliper 36a and a second brake disk 36b. More specifically, the second brake disk 36b rotates together with the front wheel 15.

As shown in Fig. 3, the first braking force generating mechanism 35 is connected to a first master cylinder 40a through a first brake fluid passage 42. A reservoir tank 41a and a brake pedal 18 as a first operation member are connected to the first master cylinder 40a. If a rider operates the brake pedal 18, hydraulic pressure is supplied from the first master cylinder 40a to the first braking force generating mechanism 35. As shown in Fig. 2, the brake pedal 18 is provided with a stroke sensor 18a. An operation amount of the brake pedal 18 is detected also by the stroke sensor 18a. The detected operation amount of the brake pedal 18 is output to a CPU 28a.

A second hydraulic pressure sensor 43 as the first hydraulic pressure detection section is connected to a point A of the first brake fluid passage 42. The second hydraulic pressure sensor 43 detects hydraulic pressure at the point A of the first brake fluid passage 42.

A first on-off valve 44 and a third on-off valve 45 are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied, and which closes when electric power is supplied. The third on-off valve 45 is disposed between the point C and a point D of the first brake fluid passage 42. The third on-off valve 45 is also an open-when-nonenergized type on-off valve like the first on-off valve 44.

In this embodiment, the first on-off valve 44, the third brake fluid passage 47, the first brake fluid pump 49 and the second on-off valve 57 constitute the front association mechanism 21.

A third hydraulic pressure sensor 46 as the second hydraulic pressure detection section is connected to a point E of the first brake fluid passage 42. The third hydraulic pressure sensor 46 has a higher hydraulic pressure detection accuracy than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a and the point C closer to the first braking force generating mechanism 35 than a portion of the first brake fluid passage 42 where the first on-off valve 44 is disposed are connected to each other through a third brake fluid passage 47. The third brake fluid passage 47 extends from the point B to the point C through a point F and a point H.

**A (first)** brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied and which opens when electric power is supplied.

Further, a buffer chamber 58 is connected to the point H of the third brake fluid passage 47.

The point F, which is located closer to the point B than the second on-off valve 57, is connected to the second caliper 36a through a fourth brake fluid passage 51. That is, the first brake fluid passage 51 connects the first master cylinder 40a and the second braking force generating mechanism 36 with each other without using the second brake fluid passage 60.

A fifth on-off valve 52 is disposed between the point F and a point G of the fourth brake fluid passage 51. The fifth on-off valve 52 is an open-when-nonenergized type on-off valve. A metering valve 53 is disposed between the point G of the fourth brake fluid passage 51 and the second caliper 36a.

The point D of the first brake fluid passage 42 and the point H of the third brake fluid passage 47 are connected to each other through a fifth brake fluid passage 56. A fourth on-off valve 48 is disposed in the fifth brake fluid passage 56. The fourth on-off valve 48 is a closed-when-nonenergized type on-off valve.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60. A reservoir tank 41b and a brake lever 13 as a second operation member are connected to the second master cylinder 40b. If a rider operates the brake lever 13, hydraulic pressure is supplied from the second master cylinder 40b to the second braking force generating mechanism 36. As shown in Fig. 2, a stroke sensor 13a is provided to the brake lever 13. The operation amount of the brake lever 13 is detected also by the stroke sensor 13a. The detected operation amount of the brake lever 13 is output to the CPU 28a.

A first hydraulic pressure sensor 61 as an operation amount detection section is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

As described above, in this embodiment, the first hydraulic pressure sensor 61 detects both the hydraulic pressure in the second brake fluid passage 60 and the operation of the brake lever 13. Therefore, as compared with a case where a special-purpose sensor for detecting the operation of the brake lever 13 is provided, the number of parts can be reduced and the structure can be simplified.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b and a point L of the second brake fluid passage 60 closer to the second braking force generating mechanism 36 than the seventh on-off valve 62 are connected to each other through a seventh brake fluid passage 63.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 is disposed between the second brake fluid pump 64 and the point L. The eighth on-off valve 65 is a closed-when-nonenergized type on-off valve. A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31 . In this embodiment, the ECU 28 is used only for controlling the HU 31. An ECU (not shown) used for controlling the engine 20 shown in Fig. 1 is provided independently from the ECU 28. However, the present invention is not limited to this configuration. For example, one ECU 28 may control both the engine 20 and the HU 31.

The ECU 28 includes the CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27.

A method for calculating a vehicle speed from the front wheel rotation speed and the rear wheel rotation speed is not especially limited. For example, an average value of the front wheel rotation speed and the rear wheel rotation speed may be defined as the vehicle speed.

In this embodiment, the vehicle speed sensor 27 constituted by the front wheel rotation speed sensor 27a and the rear wheel rotation speed sensor 27b above constitutes the locked state detection section.

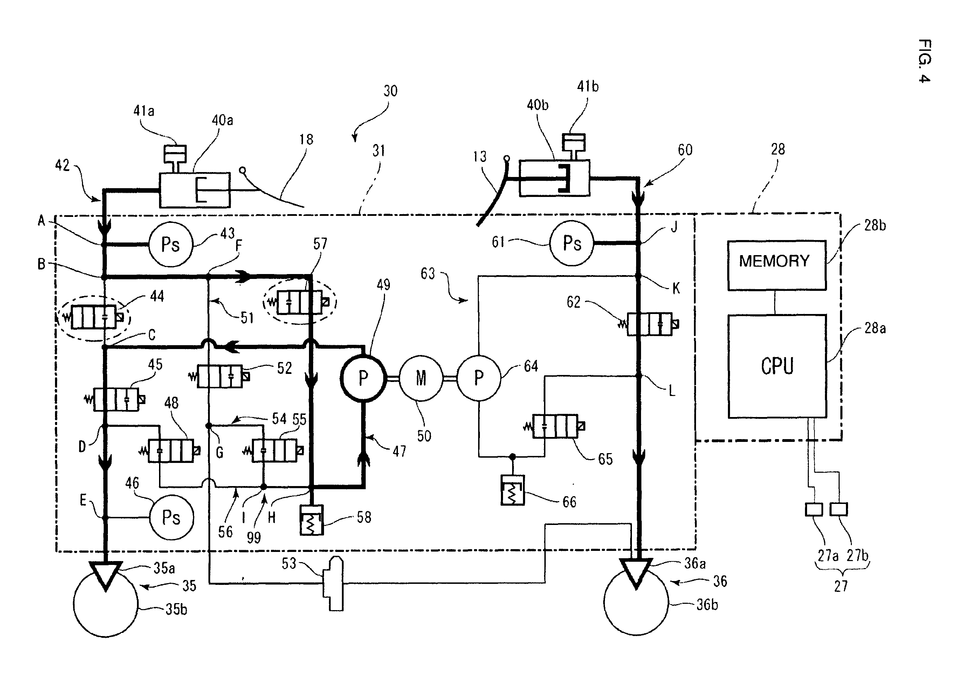

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig , 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the open-when-nonenergized type on-off valve. Therefore, the hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of the hydraulic pressure in the second brake fluid passage 60 is detected by the first hydraulic pressure sensor 61, and this fact is output to the ECU 28. The ECU 28 determines whether or not the brake lever 13 is operated based on the hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and the brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

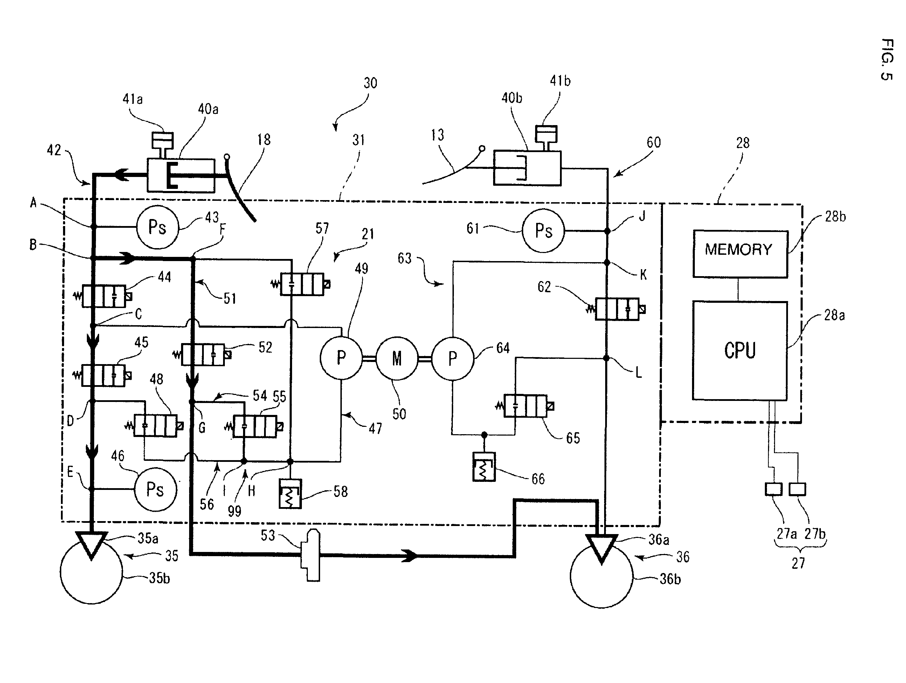

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves.
Therefore, the brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

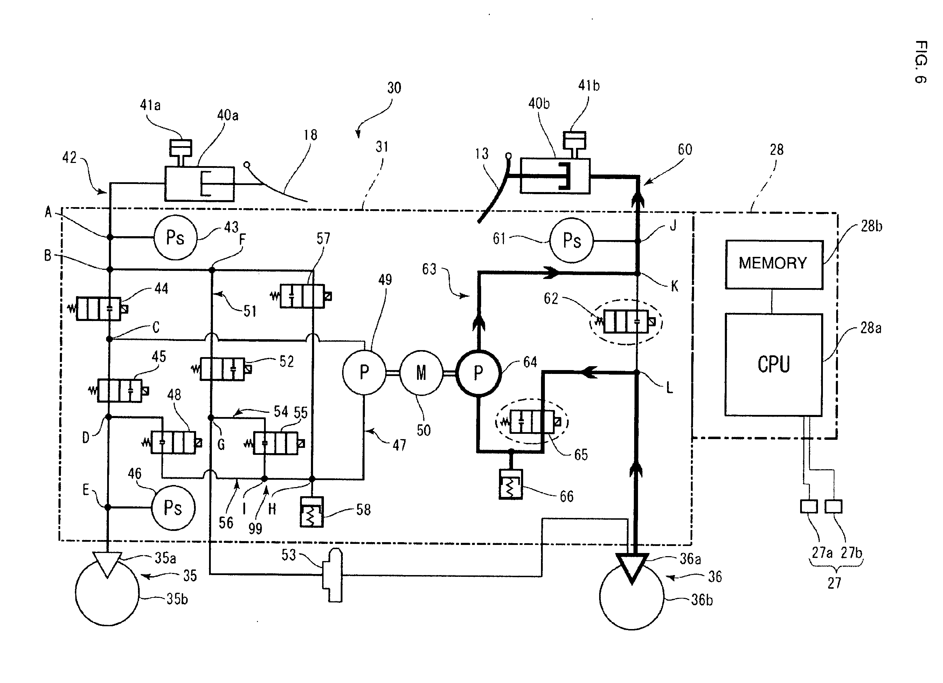

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 stops the current supply to the seventh and the eighth on-off valves 62 and 65. With this, the seventh on-off valve 62 is opened and the eighth on-off valve 65 is closed. As a result, a braking force generated in the second braking force generating mechanism 36 is again increased.

### (Concerning ABS action of first braking force generating mechanism 35 when brake pedal 18 is operated)

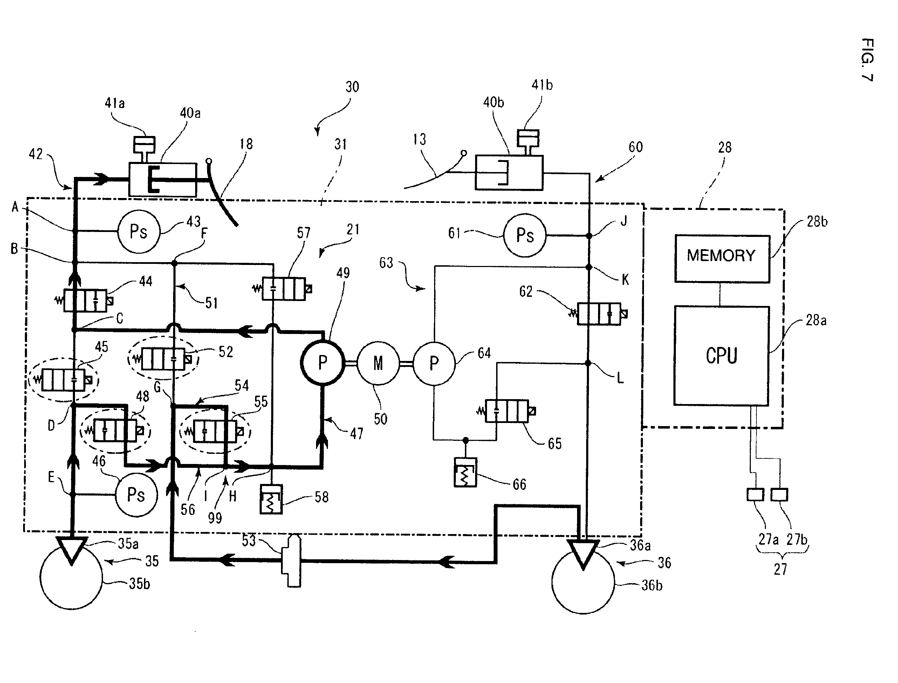

Fig. 7 is a schematic structure diagram of the braking system for describing the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b, More specifically, the ECU 28 detects the locked state of the rear wheel 17 when the level of the rear wheel rotation speed is largely reduced with respect to the vehicle speed.

If the ECU 28 detects the locked state of the rear wheel 17, the ECU 28 supplies current to the third on-off valve 45 and the fourth on-off valve 48. With this, the third on-off valve 45 is closed and the fourth on-off valve 48 is opened. Therefore, the brake fluid in the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 stops the current supply to the third and the fourth on-off valves 45 and 48. With this, the third on-off valve 45 is opened and the fourth on-off valve 48 is closed. As a result, a braking force generated in the first braking force generating mechanism 35 is again increased.

These ABS actions are the same also during the front associationed operation in which the brake lever 13 is being operated.

In this embodiment, the third and the fourth on-off valves 45 and 48, a portion of the third brake fluid passage 47, the fifth brake fluid passage 56 and the first brake fluid pump 49 constitute the ABS mechanism 99 on the side of the rear wheel 17.

If the ECU 28 detects the locked state of the front wheel 15, the ECU 28 supplies current to the fifth on-off valve 52 and the sixth on-off valve 55 as shown in Fig. 7. With this, the fifth on-off valve 52 is closed and the sixth on-off valve 55 is opened. Thus, brake fluid in the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, a braking force generated in the second braking force generating mechanism 36 is again increased.

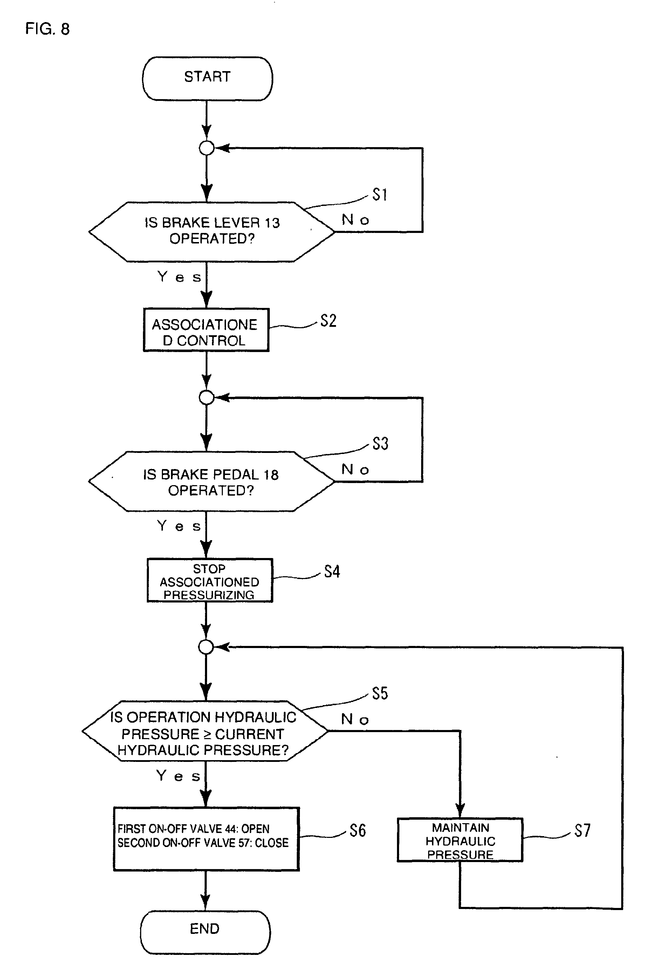

Next, detailed contents of a associationed stop control in the braking system 30 will be described with reference to mainly Fig. 8. In this embodiment, if the brake lever 13 is operated during the front associationed control, the associationed stop control for stopping the front associationed control is carried out. More specifically, in step S1, the ECU 28 determines whether or not the brake lever 13 is operated based on hydraulic pressure detected by the first hydraulic pressure sensor 61 as the operation amount detection section shown in Fig. 3. In more detail, when the hydraulic pressure detected by the first hydraulic pressure sensor 61 is smaller than a predetermined hydraulic pressure, the ECU 28 determines that the brake lever 13 is not operated. In this case, step S1 is again executed.

On the other hand, when hydraulic pressure detected by the first hydraulic pressure sensor 61 is equal to or higher than the predetermined hydraulic pressure, the ECU 28 determines that the brake lever 13 is operated. In this case, the procedure is advanced to step S2.

In step S2, the ECU 28 carries out a front associationed control. Here, the front associationed control means a control for supplying hydraulic pressure of a magnitude corresponding to the operation amount of the brake lever 13 also to the first braking force generating mechanism 35 when the brake lever 13 as the second operation member is operated. More specifically, the ECU 28 closes the first on-off valve 44 and opens the second on-off valve 57. With this, brake fluid in the first master cylinder 40a is sucked by the first brake fluid pump 49, and is then supplied to the first braking force generating mechanism 35. As a result, hydraulic pressure is supplied to the first braking force generating mechanism 35. The ECU 28 controls the magnitude of the hydraulic pressure supplied to the first braking force generating mechanism 35 to a magnitude corresponding to the operation amount of the brake lever 13 by adjusting the opening of the second on-off valve 57 in accordance with the operation amount of the brake lever 13.

During the associationed control prescribed in step S2, the ECU 28 as the control unit detects hydraulic pressure supplied to the first braking force generating mechanism 35 by the third hydraulic pressure sensor 46. The ECU 28 detects the operation of the brake pedal 18 by the second hydraulic pressure sensor 43.

On the other hand, when the associationed control is not executed, the third hydraulic pressure sensor 46 having high detection accuracy detects hydraulic pressure supplied to the first braking force generating mechanism 35, and also detects the operation of the brake pedal 18.

After step S2, step S3 is executed. In step S3, the ECU 28 determines whether or not the brake pedal 18 is operated based on hydraulic pressure detected by the second hydraulic pressure sensor 43. More specifically, when hydraulic pressure detected by the second hydraulic pressure sensor 43 is smaller than the predetermined hydraulic pressure, the ECU 28 determines that the brake pedal 18 is not operated. In this case, step S3 is again executed.

On the other hand, when hydraulic pressure detected by the second hydraulic pressure sensor 43 is equal to or higher than the predetermined hydraulic pressure, the ECU 28 determines that the brake pedal 18 is operated. In this case, step S4 is executed after step S3.

In step S4, the ECU 28 stops a associationed pressurizing operation. With this, hydraulic pressure supplied to the first braking force generating mechanism 35 is not varied even if the operation amount of the brake lever 13 is varied after step S4.

After step S4, step S5 is executed. In step S5, the ECU 28 determines whether or not hydraulic pressure (operation hydraulic pressure) of a magnitude corresponding to the operation amount of the brake pedal 18 detected by the second hydraulic pressure sensor 43 is equal to or higher than the current hydraulic pressure supplied to the first braking force generating mechanism 35.

When it is determined in step S5 that the operation hydraulic pressure is equal to or higher than the current hydraulic pressure, the procedure is advanced to step S6. In step S6, the ECU 28 opens the first on-off valve 44 and closes the second on-off valve 57. With this, the supply of hydraulic pressure to the first braking force generating mechanism 35 by the association mechanism 21 is stopped, and the hydraulic pressure is supplied to the first braking force generating mechanism 35 by the operation of the brake pedal 18. Thus, hydraulic pressure of a magnitude corresponding to the operation amount of the brake pedal 18 is supplied to the first braking force generating mechanism 35. Therefore, a braking force of a magnitude suitable for a rider's intention is generated in the first braking force generating mechanism 35. Therefore, the rider is less prone to be bothered by a feeling of incongruity.

On the other hand, when it is determined in step S5 that the operation hydraulic pressure is smaller than the current hydraulic pressure, the procedure is advanced to step S7. In step S7, the ECU 28 closes the first on-off valve 44 and opens the second on-off valve 57 and in this state, maintains the current hydraulic pressure. If step S7 is completed, the procedure is returned to step S5. Thus, in this embodiment, the current hydraulic pressure is maintained until the operation hydraulic pressure corresponding to the operation amount of the brake pedal 18 becomes equal to or higher than the current hydraulic pressure.

It is also conceived that, for example, even when the operation hydraulic pressure is smaller than the current hydraulic pressure, the first and the second on-off valves 44 and 57 are operated when the brake pedal 18 is operated so that hydraulic pressure is supplied to the first braking force generating mechanism 35 by operating the brake pedal 18. However, this configuration leads to an abrupt reduction of the hydraulic pressure supplied to the first braking force generating mechanism 35 when the brake pedal 18 is operated. Thus, the braking force generated in the first braking force generating mechanism 35 is abruptly reduced.

On the contrary, according to this embodiment, the current hydraulic pressure is maintained until the operation hydraulic pressure corresponding to the operation amount of the brake pedal 18 becomes equal to or higher than the current hydraulic pressure as described above. Therefore, it is possible to suppress abrupt variation in braking force generated in the first braking force generating mechanism 35.

When the brake pedal 18 is operated during the associationed control, the hydraulic pressure supplied from the first master cylinder 40a becomes extremely high. Especially, when the operation member connected to the first master cylinder 40a is the brake pedal 18 which is operated by foot as in this embodiment, high hydraulic pressure is prone to be applied to the second hydraulic pressure sensor 43 as compared with a case where the brake lever operated by hand. Therefore, high resistance to pressure is required for the second hydraulic pressure sensor 43. Therefore, the second hydraulic pressure sensor 43 has high resistance to pressure.

Especially, when the ABS mechanism 99 is provided as in this embodiment, hydraulic pressure applied to the second hydraulic pressure sensor 43 when the ABS mechanism 99 is driven becomes extremely high. Therefore, the second hydraulic pressure sensor 43 has high resistance to pressure.

However, the resistance to pressure of the hydraulic pressure sensor and the detection accuracy are in the trade off relation. That is, it is not possible to expect high detection accuracy from a hydraulic pressure sensor having high resistance to pressure. There is a tendency that a hydraulic pressure sensor having high detection accuracy has low resistance to pressure. Thus, when a second hydraulic pressure sensor 43 constituted by a hydraulic pressure sensor having high resistance to pressure is provided, it becomes difficult to detect the operation amount of the brake pedal 18 highly accurately.

On the other hand, it is not possible to expect so much high resistance to pressure from the third hydraulic pressure sensor 46 which is disposed in the vicinity of the first braking force generating mechanism 35. Therefore, it is conceived to provide only the third hydraulic pressure sensor 46 constituted by a hydraulic pressure having high detection accuracy. However, only with the third hydraulic pressure sensor 46, operation of the brake pedal 18 cannot be detected during the associationed control.

On the other hand, in this embodiment, two hydraulic pressure sensors are provided, i.e., the second hydraulic pressure sensor 43 which detects hydraulic pressure at the point A closer to the first master cylinder 40a than the point B of the first brake fluid passage 42, and the third hydraulic pressure sensor 46 which detects hydraulic pressure at the point E closer to the first master cylinder 40a than the point D of the first brake fluid passage 42. When the ECU 28 does not carry out the associationed control, the third hydraulic pressure sensor 46 having high detection accuracy detects hydraulic pressure supplied to the first braking force generating mechanism 35. Therefore, when the associationed control is not executed, it is possible to highly accurately detect hydraulic pressure supplied to the first braking force generating mechanism 35. It is also possible to highly accurately detect the operation amount of the brake pedal 18.

During the associationed control, on the other hand, the ECU 28 detects the operation of the brake pedal 18 by the second hydraulic pressure sensor 43. Thus, in the embodiment, it is also possible to detect the operation of the brake pedal 18 during the associationed control.

During the associationed control, hydraulic pressure of the first master cylinder 40a is finely varied in some cases depending upon the associationed control. Therefore, a hydraulic pressure value detected by the second hydraulic pressure sensor 43 is finely varied in some cases. An influence of the very small variation of a detected value resulting from the associationed control is eliminated and then, only large variation in hydraulic pressure caused as a result of a rider's operation of the brake pedal 18 should be detected. Accordingly, so much high detection accuracy is not required for the second hydraulic pressure sensor 43. In other words, there is no problem even if the second hydraulic pressure sensor 43 has low detection accuracy.

Since the second hydraulic pressure sensor 43 has high resistance to pressure, the second hydraulic pressure sensor 43 is less prone to be damaged even if the brake pedal 18 is operated during the associationed control and high hydraulic pressure is applied to the second hydraulic pressure sensor 43.

The second hydraulic pressure sensor 43 has lower detection accuracy than the third hydraulic pressure sensor 46. Therefore, during the associationed control, the detection accuracy of the operation amount of the brake pedal 18 becomes low. According to this embodiment, however, the first master cylinder 40a and the second braking force generating mechanism 36 are connected to each other through the fourth brake fluid passage 51. Therefore, the brake fluid of the first master cylinder 40a is supplied also to the second braking force generating mechanism 36 without using the electronic control. Thus, during the associationed control, requirement of detection accuracy of the operation amount of the brake pedal 18 is relatively low. Therefore, there is not a very serious problem even if the detection accuracy of the operation amount of the brake pedal 18 is lowered.

In this embodiment, the fourth brake fluid passage 51 connects the first master cylinder 40a and the second braking force generating mechanism 36 with each other without using the second brake fluid passage 60. That is, **a** brake fluid passage from the first master cylinder 40a to the second braking force generating mechanism 36 and **a** brake fluid passage from the second master cylinder 40b to the second braking force generating mechanism 36 are separated from each other. Thus, even when the brake lever 13 is operated during rear associationed operation, hydraulic pressure in the second brake fluid passage 60 is not increased so much.

Therefore, the first hydraulic pressure sensor 61 is not required to have so much high resistance to pressure. Therefore, the first hydraulic pressure sensor 61 can have high detection accuracy. Therefore, it is possible to highly accurately measure the operation amount of the brake lever 13 and hydraulic pressure supplied to the second braking force generating mechanism 36.

In this embodiment, a magnitude of hydraulic pressure supplied to the first braking force generating mechanism 35 is adjusted by adjusting the opening of the second on-off valve 57. For this reason, it is possible to more swiftly and more correctly adjust hydraulic pressure than a case where the magnitude of hydraulic pressure supplied to the first braking force generating mechanism 35 is adjusted by adjusting output of the first brake fluid pump 49, for example.

In this embodiment, the first on-off valve 44 is an open-when-nonenergized type on-off valve, and the second on-off valve 57 is a closed-when-nonenergized type on-off valve. Thus, when the association mechanism 21 is not driven, it is unnecessary to supply current to the first and the second on-off valves 44 and 57. It is necessary to supply current to the first and the second on-off valves 44 and 57 only when the association mechanism 21 is driven. Thus, electric power consumed in the motorcycle 1 can be reduced.

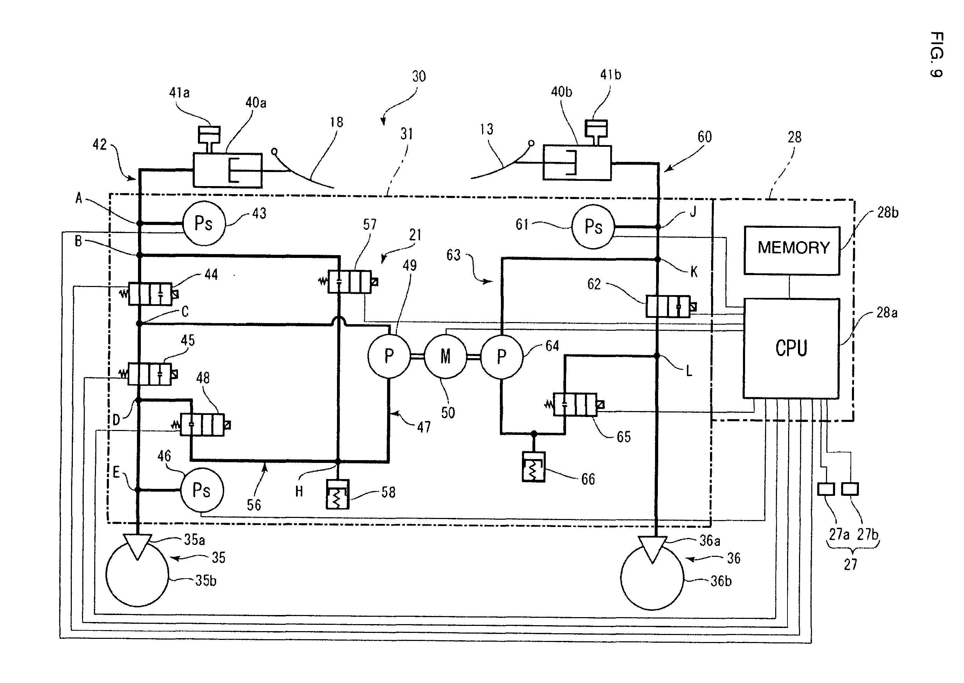

Fig. 9 is a schematic structure diagram showing a structure of a braking system according to this modification. As shown in Fig. 9, the braking system may not be provided with the rear association mechanism. More specifically, in this modification, the fourth brake fluid passage 51, the metering valve 53, the fifth on-off valve 52, the sixth brake fluid passage 54 and the sixth on-off valve 55 are not provided.

## Claims

1. A braking system for a motorcycle, including:
a first braking force generating mechanism (35) which generates a braking force when hydraulic pressure is supplied;
a first master cylinder (40a) which supplies hydraulic pressure to the first braking force generating mechanism (35);
a first brake fluid passage (42) which connects the first master cylinder (40a) and
the first braking force generating mechanism (35) with each other;
a first operation member (18) for operating the first master cylinder (40a);
a second braking force generating mechanism (36) which generates a braking force when hydraulic pressure is supplied;
a second master cylinder (40b) which supplies hydraulic pressure to the second braking force generating mechanism (36) ;
a second brake fluid passage (60) which connects the second master cylinder (40b) and the second braking force generating mechanism (36) with each other;
a second operation member (13) for operating the second master cylinder (40b);
an operation amount detection section (61) which detects an operation amount of the second operation member (13) ;
an association mechanism (21) including a first on-off valve (44) which is
disposed in the first brake fluid passage (42) to open and close the first brake fluid passage (42), a third brake fluid passage (47) having one end (13) thereof (B) connected to a portion of the first brake fluid passage (42) closer to the first master cylinder (40a) than the first on-off valve (44) and the other end (C) thereof connected to a portion of the first brake fluid passage (42) closer to the first braking force generating mechanism (35) than the first on-off valve (44) a brake fluid pump (49) which is disposed in the third brake fluid passage (47) to send brake fluid from the third brake fluid passage (47) on the side of the first master cylinder (40a) toward the first braking force generating mechanism (35), and a
second on-off valve (57) which is disposed in the third brake fluid passage (47) to open and close the third brake fluid passage (47);
a first hydraulic pressure detection section (43) which detects hydraulic pressure of a portion of the first brake fluid passage (42) closer to the first master cylinder (40a) than a portion of the first brake fluid passage (42) to which the one end of the third brake fluid passage (47) is connected;
a second hydraulic pressure detection section (46) which detects hydraulic pressure of a portion of the first brake fluid passage (42) closer to the first
braking force generating mechanism (35) than a portion of the first brake fluid passage (42) to which the other end (C) of the third brake fluid passage (47) is connected, and
a control unit (28) which, when the second operation member (13) is operated,
closes the first on-off valve (44), opens the second on-off valve (57), and drives the brake fluid pump (49) to supply brake fluid in the first master cylinder (40a) to
the first braking force generating mechanism (35), thereby carrying out an associationed control to supply hydraulic pressure of a magnitude corresponding to the operation amount of the second operation member (13) to the first braking
force generating mechanism (35), wherein control unit determines the operation amount of the first operation member (18) based on a detection value of the first hydraulic pressure detection section (43) when the associationed control is in operation,
**characterized in that** the second hydraulic pressure detection section (46) having higher detection accuracy of the hydraulic pressure and lower resistance to pressure than the first hydraulic pressure detection section (43), **in that** said control unit (28) determines an operation amount of the first operation member (18) based on a detection value of the second hydraulic pressure detection section (46) when the associationed control is not in operation,
and **in that** in case the first operation member (18) has been operated more than a given operation amount, the control unit (28) does not start the associationed control when the second operating member (13) is operated.

2. A braking system for a motorcycle according to claim 1, **characterized in that** the first operation member (18) is a brake pedal.

3. A braking system for a motorcycle according to claim 1 or 2, **characterized by** a fourth brake fluid passage (51) which connects the first master cylinder (40a) and
the second braking force generating mechanism (36) with each other without using the second brake fluid passage (60).

4. A braking system for a motorcycle according to any one of claims 1 to 3, **characterized In that** the control unit (28) stops the associationed control when the first operation member (18) is operated during the associationed control.

5. A braking system for a motorcycle according to claim 4, **characterized in that**, when the first operation member (18) is operated during the associationed control, the control unit (28) opens the first on-off valve (44) and closes the second on-off valve (57) if hydraulic pressure of a magnitude corresponding to the operation amount of the first operation member (18) detected by the first hydraulic pressure detection section (43) is equal to or higher than the current hydraulic pressure supplied to the first braking force generating mechanism (35) and detected by the second hydraulic pressure detection section (46), and causes the association mechanism (21) to maintain the current hydraulic pressure supplied to the first braking force generating mechanism (35) if the hydraulic pressure of the magnitude corresponding to the operation amount of the first operation member (18) detected by the first hydraulic pressure detection section (43) is smaller than the current hydraulic pressure supplied to the first braking force generating mechanism (35) detected by the second hydraulic pressure detection section (46).

6. A braking system for a motorcycle according to any one of claims 1 to 5, **characterized in that** the operation amount detection section is a hydraulic pressure detection section (61) which detects hydraulic pressure in the second brake fluid passage (60).

7. A braking system for a motorcycle according to any one of claims 1 to 6, **characterized In that** the control unit (28) adjusts an opening of the second on-off valve (57), thereby controlling hydraulic pressure supplied to the first braking force generating mechanism (35) during the associationed control.

8. A braking system for a motorcycle according to any one of claims 1 to 7, **characterized In that** the first on-off valve (44) is opened when electric power is not supplied, and is closed when electric power is supplied, and
the second on-off valve (57) is closed when electric power is not supplied, and is opened when electric power is supplied.

9. A motorcycle including a front wheel (15) and a rear wheel (17) and braking system for a motorcycle according to any one of claims 1 to 8 wherein, the first braking force generating mechanism (35) is provided to the rear wheel (17), and the second braking force generating mechanism (36) is provided to the front wheel (15).

10. A motorcycle according to claim 9, **characterized in that** the braking system further includes:
a locked state detection section which detects a locked state of the rear wheel (17); and
an ABS mechanism (99) which sends brake fluid supplied to the first braking force generating mechanism (35) toward the first master cylinder (40a) through a portion of the first brake fluid passage (42) where the hydraulic pressure is detected by the first hydraulic pressure detection section (43), and
when the locked state of the rear wheel (17) is detected by the locked state detection section, the control unit (28) drives the ABS mechanism (99) to reduce the hydraulic pressure supplied to the first braking force generating mechanism (35).

## Patentansprüche

1. Bremssystem für ein Motorrad, enthaltend:
eine erste Bremskraft- Erzeugungsvorrichtung (35), die eine Bremskraft erzeugt,
wenn ein Hydraulikdruck zugeführt wird;
einen ersten Hauptzylinder (40a), der Hydraulikdruck zu der ersten Bremskraft-Erzeugungsvorrichtung (35) zuführt;
einen ersten Bremsfluidkanal (42), der den ersten Hauptzylinder (40a) und die erste Bremskraft- Erzeugungsvorrichtung (35) miteinander verbindet;
ein erstes Betätigungsteil (18) zum Betätigen des ersten Hauptzylinders (40a);
eine zweite Bremskraft- Erzeugungsvorrichtung (36), die eine Bremskraft erzeugt,
wenn ein Hydraulikdruck zugeführt wird;
einen zweiten Hauptzylinder (40b), der Hydraulikdruck zu der zweiten Bremskraft-Erzeugungsvorrichtung (36) zuführt;
einen zweiten Bremsfluidkanal (60), der den zweiten Hauptzylinder (40b) und die zweite Bremskraft- Erzeugungsvorrichtung (36) miteinander verbindet;
ein zweites Betätigungsteil (13) zum Betätigen des zweiten Hauptzylinders (40b);
einen Betätigungsgröße- Erfassungsabschnitt (61), der einen Betätigungsgröße des zweiten Betätigungsteils (13) erfasst;
eine Verbundvorrichtung (21), die ein erstes Ein- Aus- Ventil (44) enthält, das in dem ersten Bremsfluidkanal (42) angeordnet ist, um den ersten Bremsfluidkanal (42) zu öffnen oder zu schließen, einen dritten Bremsfluidkanal (47), dessen eines Ende (13) mit einem Abschnitt des ersten Bremsfluidkanals (42) näher zu dem ersten Hauptzylinder (40a) als das erste Ein- Aus- Ventil (44) verbunden ist und
dessen anderes Ende (13) mit einem Abschnitt des ersten Bremsfluidkanals (42) näher zu der ersten Bremskraft- Erzeugungsvorrichtung (35) als das erste Ein-Aus- Ventil (44) einer Brems- Fluidpumpe (49) verbunden ist, die in dem dritten Bremsfluidkanal (47) angeordnet ist, um Bremsfluid aus dem dritten Bremsfluidkanal (47) auf der Seite des ersten Hauptzylinders (40a) in die Richtung zu der ersten Bremskraft- Erzeugungsvorrichtung (35) zu senden, und ein zweites Ein-Aus- Ventil (57), das in dem dritten Bremsfluidkanal (47) angeordnet ist, um den dritten Bremsfluidkanal (47) zu öffnen oder zu schließen;
einen ersten Hydraulikdruck- Erfassungsabschnitt (43), der den Hydraulikdruck eines Abschnittes des ersten Bremsfluidkanals (42) näher zu dem ersten Hauptzylinder (40a) als ein Abschnitt des ersten Bremsfluidkanals (42), mit dem das eine Ende des dritten Bremsfluidkanals (47) verbunden ist, erfasst;
einen zweiten Hydraulikdruck- Erfassungsabschnitt (46), der den Hydraulikdruck eines Abschnittes des ersten Bremsfluidkanals (42) näher zu der ersten Bremskraft- Erzeugungsvorrichtung (35) als zu einem Abschnitt des ersten Bremsfluidkanals (42), mit dem das eine Ende des dritten Bremsfluidkanals (47) verbunden ist, erfasst; und
eine Steuerungseinheit (28), die, wenn das zweite Betätigungsteil (13) betätigt wird, das erste Ein- Aus- Ventil (44) schließt, das zweite Ein- Aus- Ventil (57) öffnet und die Bremsfluidpumpe (49) antreibt, um Bremsfluid in den ersten Hauptzylinder (40a) zu der ersten Bremskraft- Erzeugungsvorrichtung (35) zuzuführen,
um dadurch eine zugehörige Steuerung auszuführen, um Hydraulikdruck einer Größe zuzuführen, die der Betätigungsgröße des zweiten Betätigungsteils (13) zu der ersten Bremskraft- Erzeugungsvorrichtung (35) entspricht, wobei die Steuerungseinheit (28) die Betätigungsgröße des ersten Betätigungsteil (18) auf der Grundlage eines Erfassungswertes des ersten Hydraulikdruck- Erfassungsabschnittes (43) festlegt, wenn die zugehörige Steuerung in Betrieb ist und **dadurch gekennzeichnet, dass** der zweite Hydraulikdruck- Erfassungsabschnitt (46) eine höhere Erfassungsgenauigkeit des Hydraulikdrucks und einen niedrigeren Widerstand gegenüber Druck als der erste Hydraulikdruck- Erfassungsabschnitt (43) hat, dadurch dass die Steuerungseinheit (28) eine Betätigungsgröße des ersten Betätigungsteils (18) auf der Grundlage des zweiten Hydraulikdruck- Erfassungsabschnittes (46) festlegt, wenn die zugehörige Steuerung nicht in Betrieb ist, die Betätigungsgröße des ersten Betätigungsteils (18) auf der Grundlage eines Erfassungswertes des ersten Hydraulikdruck- Erfassungsabschnittes (43) festlegt,
wenn die zugehörige Steuerung in Betrieb ist und dass in einem Fall , in dem das erste Betätigungsteil (13) mehr als eine gegebene Betätigungsgröße betätigt worden ist, die Steuerungseinheit (28) die zugehörige Steuerungseinheit nicht startet,
wenn das zweite Betätigungsteil (13) betätigt wird.

2. Bremssystem für ein Motorrad nach Anspruch 1, **dadurch gekennzeichnet, dass** das erste Betätigungsteil (18) ein Bremspedal ist.

3. Bremssystem für ein Motorrad nach Anspruch 1 oder 2, **gekennzeichnet durch** einen vierten Bremsfluidkanal (51), der den ersten Hauptzylinder (40a) und die zweite Bremskraft- Erzeugungsvorrichtung (36) miteinander ohne Verwendung des zweiten Bremsfluidkanals (60) verbindet.

4. Bremssystem für ein Motorrad nach einem der Ansprüche 1 bis 3, **dadurch gekennzeichnet, dass** die Steuerungseinheit (28) die zugehörige Steuerung stoppt, wenn das erste Betätigungsteil (18) während die zugehörige Steuerung betätigt wird.

5. Bremssystem für ein Motorrad nach Anspruch 4, **dadurch gekennzeichnet, dass** wenn das erste Betätigungsteil (18) während der zugehörigen Steuerung betätigt wird, die Steuerungseinheit (28) das erste Ein- Aus- Ventil (44) öffnet oder das zweite Ein- Aus- Ventil (57) schließt, wenn der Druck einer Größe, die der Betätigungsgröße des ersten Betätigungsteils (18) entspricht, erfasst durch den ersten Hydraulikdruck- Erfassungsabschnitt (43), gleich zu oder höher ist als der momentane Hydraulikdruck, zugeführt zu der ersten Bremskraft- Erzeugungsvorrichtung (35) und erfasst durch den zweiten Hydraulikdruck- Erfassungsabschnitt (46) ist, und die Verbundvorrichtung (21) veranlasst, den momentanen Hydraulikdruck, zugeführt zu der ersten Bremskraft- Erzeugungsvorrichtung (35), beizubehalten, wenn der Hydraulikdruck der Größe, die der Betätigungsgröße des ersten Betätigungsteils (18) entspricht, erfasst durch den ersten Hydraulikdruck- Erfassungsabschnitt (43), kleiner als der momentane Hydraulikdruck ist, zugeführt zu der ersten Bremskraft- Erzeugungsvorrichtung (35), erfasst durch den zweiten Hydraulikdruck- Erfassungsabschnitt (46) ist.

6. Bremssystem für ein Motorrad nach einem der Ansprüche 1 bis 5, **dadurch gekennzeichnet, dass** der Betätigungsgröße- Erfassungsabschnitt ein Hydraulikdruck- Erfassungsabschnitt (61) ist, der den Hydraulikdruck in dem zweiten Bremsfluidkanal (60) erfasst.

7. Bremssystem für ein Motorrad nach einem der Ansprüche 1 bis 6, **dadurch gekennzeichnet, dass** die Steuerungseinheit (28) eine Öffnung des zweiten Ein-Aus- Ventil (57) einstellt, um dadurch den Hydraulikdruck, zugeführt zu der ersten Bremskraft- Erzeugungsvorrichtung (35) während der zugehörigen Steuerung, zu steuern.

8. Bremssystem für ein Motorrad nach einem der Ansprüche 1 bis 7, **dadurch gekennzeichnet, dass** das erste Ein- Aus- Ventil (44) geöffnet ist, wenn keine Elektroenergie zugeführt wird und geschlossen ist, wenn Elektroenergie zugeführt wird, und
das zweite Ein- Aus- Ventil (57) geschlossen ist, wenn keine Elektroenergie zugeführt wird und geöffnet ist, wenn Elektroenergie zugeführt wird.

9. Motorrad, enthaltend ein Vorderrad (15) und ein Hinterrad (17) und ein Bremssystem für ein Motorrad nach einem der Ansprüche 1 bis 8, wobei die erste Bremskraft- Erzeugungsvorrichtung (35) an dem Hinterrad (17) vorgesehen ist und die zweite Bremskraft- Erzeugungsvorrichtung (36) an dem Vorderrad (15) vorgesehen ist.

10. Motorrad nach Anspruch 9, **dadurch gekennzeichnet, dass** das Bremssystem außerdem enthält:
einen Blockierungszustand- Erfassungsabschnitt, der einen blockierten Zustand des Hinterrades (17) erfasst; und
eine ABS- Vorrichtung (99), die Bremsfluid, zugeführt zu der ersten Bremskraft-Erzeugungsvorrichtung (35) in die Richtung zu dem ersten Hauptzylinder (40a) durch einen Abschnitt des ersten Bremsfluidkanals (42) sendet, wo der Hydraulikdruck durch den ersten Hydraulikdruck- Erfassungsabschnitt (43) erfasst wird,
und
wenn der blockierte Zustand des Hinterrades (17) durch den Blockierungszustand- Erfassungsabschnitt erfasst ist, die Steuerungseinheit (28)die ABS- Vorrichtung (99) antreibt, um den Hydraulikdruck, zugeführt zu der ersten Bremskraft-Erzeugungsvorrichtung (35), zu reduzieren.

## Revendications

1. Système de freinage pour motocyclette, comprenant :
- un premier mécanisme générateur de force de freinage (35) qui génère une force de freinage lorsqu'une pression hydraulique est délivrée ;
- un premier maitre cylindre (40a) qui délivre une pression hydraulique au premier mécanisme générateur de force de freinage (35) ;
- un premier passage de fluide de frein (42) qui relie le premier maitre cylindre (40a) et le premier mécanisme générateur de force de freinage (35) l'un à l'autre ;
- un premier élément d'actionnement (18) pour actionner le premier maitre cylindre (40a) ;
- un second mécanisme générateur de force de freinage (36) qui génère une force de freinage lorsqu'une pression hydraulique est délivrée ;
- un second maitre cylindre (40b) qui délivre une pression hydraulique au second mécanisme générateur de force de freinage (36) ;
- un deuxième passage de fluide de frein (60) qui relie le second maitre cylindre (40b) et le second mécanisme générateur de force de freinage (36) l'un à l'autre ;
- un second élément d'actionnement (13) pour actionner le second maitre cylindre (40b) ;
- une section de détection de degré d'actionnement (61) qui détecte un degré d'actionnement du second élément d'actionnement (13) ;
- un mécanisme d'association (21) comprenant une première valve marche-arrêt (44) qui est disposée dans le premier passage de fluide de frein (42) pour ouvrir et fermer le premier passage de fluide de frein (42), un troisième passage de fluide de frein (47) dont une première extrémité (B) est reliée à une partie du premier passage de fluide de frein (42) plus près du premier maitre cylindre (40a) que de la première valve marche-arrêt (44) et l'autre extrémité (C) est reliée à une partie du premier passage de fluide de frein (42) plus près du premier mécanisme générateur de force de freinage (35) que de la première valve marche-arrêt (44), une pompe de fluide de frein (49) qui est disposée dans le troisième passage de fluide de frein (47) pour envoyer du fluide de frein du troisième passage de fluide de frein (47) du côté du premier maitre cylindre (40a) vers le premier mécanisme générateur de force de freinage (35) et une seconde valve marche-arrêt (57) qui est disposée dans le troisième passage de fluide de frein (47) pour ouvrir et fermer le troisième passage de fluide de frein (47) ;
- une première section de détection de pression hydraulique (43) qui détecte une pression hydraulique d'une partie du premier passage de fluide de frein (42) plus près du premier maitre cylindre (40a) que d'une partie du premier passage de fluide de frein (42) à laquelle la première extrémité du troisième passage de fluide de frein (47) est reliée ;
- une seconde section de détection de pression hydraulique (46) qui détecte une pression hydraulique d'une partie du premier passage de fluide de frein (42) plus près du premier mécanisme générateur de force de freinage (35) que d'une partie du premier passage de fluide de frein (42) à laquelle l'autre extrémité (C) du troisième passage de fluide de frein (47) est reliée ; et
- une unité de commande (28) qui, lorsque le second élément d'actionnement (13) est actionné, ferme la première valve marche-arrêt (44), ouvre la seconde valve marche-arrêt (57) et commande la pompe de fluide de frein (49) pour délivrer du fluide de frein dans le premier maitre cylindre (40a) au premier mécanisme générateur de force de freinage (35), en effectuant ainsi une commande en association pour délivrer une pression hydraulique d'une grandeur correspondant au degré d'actionnement du second élément d'actionnement (13) au premier mécanisme générateur de force de freinage (35), l'unité de commande déterminant le degré d'actionnement du premier élément d'actionnement (18) en fonction d'une valeur de détection de la première section de détection de pression hydraulique (43) lorsque la commande en association est en fonction,
- **caractérisé en ce que** la seconde section de détection de pression hydraulique (46) a une précision de détection plus élevée de la pression hydraulique et une résistance plus basse à la pression que la première section de détection de pression hydraulique (43), **en ce que** ladite unité de commande (28) détermine un degré d'actionnement du premier élément d'actionnement (18) en fonction d'une valeur de détection de la seconde section de détection de pression hydraulique (46) lorsque la commande en association n'est pas en fonction et **en ce que**, dans le cas où le premier élément d'actionnement (18) a été actionné davantage qu'un degré d'actionnement donné, l'unité de commande (28) ne commence pas la commande en association lorsque le second élément d'actionnement (13) est actionné.

2. Système de freinage pour motocyclette selon la revendication 1, **caractérisé en ce que** le premier élément d'actionnement (18) est une pédale de frein.

3. Système de freinage pour motocyclette selon les revendications 1 ou 2, **caractérisé par** un quatrième passage de fluide de frein (51) qui relie le premier maitre cylindre (40a) et le second mécanisme générateur de force de freinage (36) l'un à l'autre sans utiliser le deuxième passage de fluide de frein (60).

4. Système de freinage pour motocyclette selon l'une quelconque des revendications 1 à 3, **caractérisé en ce que** l'unité de commande (28) arrête la commande en association lorsque le premier élément d'actionnement (18) est actionné durant la commande en association.

5. Système de freinage pour motocyclette selon la revendication 4, **caractérisé en ce que**, lorsque le premier élément d'actionnement (18) est actionné durant la commande en association, l'unité de commande (28) ouvre la première valve marche-arrêt (44) et ferme la seconde valve marche-arrêt (57) si la pression hydraulique d'une grandeur correspondant au degré d'actionnement du premier élément d'actionnement (18), détectée par la première section de détection de pression hydraulique (43), est supérieure ou égale à la pression hydraulique actuelle délivrée au premier mécanisme générateur de force de freinage (35) et détectée par la seconde section de détection de pression hydraulique (46) et fait en sorte que le mécanisme d'association (21) maintienne la pression hydraulique actuelle délivrée au premier mécanisme générateur de force de freinage (35) si la pression hydraulique de la grandeur correspondant au degré d'actionnement du premier élément d'actionnement (18), détectée par la première section de détection de pression hydraulique (43), est inférieure à la pression hydraulique actuelle délivrée au premier mécanisme générateur de force de freinage (35), détectée par la seconde section de détection de pression hydraulique (46).

6. Système de freinage pour motocyclette selon l'une quelconque des revendications 1 à 5, **caractérisé en ce que** la section de détection de degré d'actionnement est une section de détection de pression hydraulique (61) qui détecte une pression hydraulique dans le deuxième passage de fluide de frein (60).

7. Système de freinage pour motocyclette selon l'une quelconque des revendications 1 à 6, **caractérisé en ce que** l'unité de commande (28) ajuste une ouverture de la seconde valve marche-arrêt (57), commandant ainsi la pression hydraulique délivrée au premier mécanisme générateur de force de freinage (35) durant la commande en association.

8. Système de freinage pour motocyclette selon l'une quelconque des revendications 1 à 7, **caractérisé en ce que** la première valve marche-arrêt (44) est ouverte lorsqu'une énergie électrique n'est pas délivrée et est fermée lorsqu'une énergie électrique est délivrée et la seconde valve marche-arrêt (57) est fermée lorsqu'une énergie électrique n'est pas délivrée et est ouverte lorsqu'une énergie électrique est délivrée.

9. Motocyclette comprenant une roue avant (15) et une roue arrière (17) et un système de freinage pour motocyclette selon l'une quelconque des revendications 1 à 8, dans lequel le premier mécanisme générateur de force de freinage (35) est disposé à la roue arrière (17) et le second mécanisme générateur de force de freinage (36) est disposé à la roue avant (15).

10. Motocyclette selon la revendication 9, **caractérisée en ce que** le système de freinage comprend en outre :
- une section de détection d'état de blocage qui détecte un état de blocage de la roue arrière (17) ; et
- un mécanisme ABS (système de freinage antiblocage) (99) qui envoie du fluide de frein délivré au premier mécanisme générateur de force de freinage (35) vers le premier maitre cylindre (40a) par une partie du premier passage de fluide de frein (42) dans lequel la pression hydraulique est détectée par la première section de détection de pression hydraulique (43) et, lorsque l'état de blocage de la roue arrière (17) est détecté par la section de détection d'état de blocage, l'unité de commande (28) commande le mécanisme ABS (99) pour réduire la pression hydraulique délivrée au premier mécanisme générateur de force de freinage (35).
